# EUROPÄISCHE PATENTANMELDUNG

(11) **EP 1 580 106 A2**
(43) Veröffentlichungstag der Anmeldung: **28.09.2005**
(21) Anmeldenummer: 05006503.6
(22) Anmeldetag: 24.03.2005
(51) Int. Cl.: B62K 3/16

(54) **Sport- und Therapiegerät**

(30) Priorität: 25.03.2004 DE 102004014500
(71) Anmelder: Seyschab, Oskar, 97070 Würzburg 1 (DE)
(72) Erfinder: Seyschab, Oskar, 97070 Würzburg 1 (DE)
(74) Vertreter: Pöhner, Wilfried Anton, Dr.

(57) **Zusammenfassung**

Sport- und Therapiegerät mit zwei oder mehreren drehbar gelagerten Rädern und zwei Achsen, die über einen eine Sitzfläche aufweisenden Rahmen miteinander verbunden sind, wobei die an einer der Achsen befestigten Räder lenkbar sind, wobei dass mindestens eines der Räder mit einer Rücklaufsperre ausgerüstet ist.

## Beschreibung

Die Erfindung betrifft ein Sport- und Therapiegerät mit zwei oder mehreren drehbar gelagerten Rädern und zwei Achsen, die über einen eine Sitzfläche aufweisenden Rahmen miteinander verbunden sind, wobei die an ein der Achsen befestigten Räder lenkbar sind.

Laufräder stehen am Beginn der Fahrradgeschichte. Sie unterscheiden sich von Fahrrädern dadurch, dass sie keine mechanischen Mittel zur Kraftübertragung einer mit Pedalen versehenen Kurbel auf eines der Räder aufweisen. Als Spielfahrzeuge für Kinder zur Schulung motorischer Fähigkeiten werden Laufräder derzeit wiederentdeckt.

Im Gegensatz zu dem mit Pedalen ausgerüsteten Fahrrad werden die Gelenke im Hüft- und Beinbereich desjenigen, der ein Laufrad benutzt, anders belastet. Beim Fahren auf ebener Fläche mit einem Laufrad wird die Vorwärtsbewegung durch eine gleichzeitige oder zeitlich versetzte sich nach hinten abstoßende Beinbewegung verursacht. Bei entsprechender Sitzhöhe berühren dabei lediglich die Fußspitzen den Boden, sodass das Belastungsmuster der Gelenke im Vergleich zum Gehen oder Pedaletreten deutlich verschieden ist. Aufgrund dieses positiven Belastungsprofils eignet sich ein Laufrad als Sport- und Therapiegerät.

Die Aufgabe der Erfindung besteht in der Konstruktion eines Laufrades, das bei Nutzung auf einer ansteigenden Fahrstrecke nicht zurückrollt, nachdem der Nutzer die das Fahrrad vorantreibende Beinbewegungen beendet. Insbesondere ist das Gerät geeignet für Maßnahmen im Bereich der Krankengymnastik, der Rehabilitation und zum Konditions- und Leistungstraining im Leistungs- und Breitensport.

Zur Lösung der Aufgabe wurde ein Fahrrad konstruiert, bei dem mindestens eines der Räder mit einer Rücklaufsperre ausgerüstet ist.

Da die Bremswirkung von der Gewichtsverteilung abhängt, wird jenes Rad mit der Rücklaufsperre ausgerüstet, das den größeren Gewichtsanteil aufnimmt. Natürlich ist denkbar, dass auch beide Räder mit einer Rücklaufsperre ausgestattet sind.

Der Kerngedanke der Erfindung besteht darin, dass das Laufrad auch von älteren oder geschwächten Menschen gefahrenlos benutzt werden kann. Insbesondere bei Nutzung des Gerätes auf einer ansteigenden Wegstrecke erlaubt die Rücklaufsperre, dass der Nutzer seine Beinbewegung unterbricht und das Fahrgerät ohne Aufbringung zusätzlicher Muskelkraft gegen das Zurückrollen gesichert wird. Ältere und geschwächte Menschen können auf diese Weise längere, ansteigende Strecken etappenartig bewältigen. Insbesondere ist das Gerät geeignet für Maßnahmen im Bereich der Krankengymnastik, der Rehabilitation und zum Konditions- und Leistungstraining im Leistungs- und Breitensport.

In einer Weiterbildung der Erfindung ist vorgesehen, dass die Rücklaufsperre in einer oder in beiden Radachsen installiert ist. Natürlich ist denkbar, dass die Rücklaufsperre mit den Rädern in deren äußeren Bereichen wechselwirkt.

In einer Weiterbildung der Erfindung ist an mindestens einem der beiden Räder ein Bremswiderstand installiert, dessen Stärke variabel einstellbar ist. Mit Hilfe dieses Bremswiderstandes sind mit dem erfindungsgemäßen Sportgerätes auch selbst auf ebenen Strecken Belastungstest durchführbar. Derartige Belastungtests mit Hilfe des erfindungsgemäßen Trainingsgerätes können insbesondere bei Sportlern, die ein Leistungs- und Konditionstraining absolvieren, zur Leistungskontrolle unter standardisierten Bedingungen dienen.

Eine besonders zweckmäßige Ausgestaltung der variablen Veränderungen des Bremswiderstandes besteht darin, diese stufig vorzunehmen. Man nimmt hierbei in Kauf, dass nicht jeder beliebige Bremswiderstand aus einem Kontinuum einstellbar wird, mit dem Vorteil jedoch, dass die bauliche Umsetzung sehr einfach über ein Getriebe realisierbar wird. Durch Betätigen eines Schalters hat es der Benutzer somit in der Hand verschiedene Stufen des Bremswiderstandes einzustellen. Die Bedienung zur Einstellung der einzelnen Widerstandsstufen kann nach Art einer Gangschaltung vorgenommen werden. In der Regel sind einzelne diskrete Bremswiderstände völlig auszureichend, um den Bedürfnissen des Benutzers gerecht zu werden.

In einer Weiterbildung des erfindungsgemäßen Gerätes ist vorgesehen, dass an den Enden der Hinterachse zwei Räder befestigt sind, wobei die Beabstandung der Räder variabel sein kann. Die Weiterbildung des Gerätes als Drei-Rad ist insbesondere dann sinnvoll, wenn das Gerät von Senioren oder Patienten mit Gehbehinderung genutzt wird. Das Gerät hat dadurch von Anfang an Standsicherheit und kann nicht kippen, wenn der Nutzer zur Balance und/oder zur Vorwärtsbewegung nicht oder infolge von Ermüdung nicht mehr in der Lage ist.

Während der Benutzung führen beide Beine eine wechselseitige Pendelbewegung durch. Wenn sich also das eine Bein im Kontakt mit dem Boden befindet und der Benutzer sich sowie sein Gerät zur Erzeugung der Vorwärtsbewegung am Boden abstößt, führt das gegenüberliegende Bein eine Bewegung nach vorne also in Bewegungsrichtung aus. Wenn das eine Bein seine Abstoßbewegung beendet hat, wird die vorwärtstreibende Kraft durch das andere, nun in Bodenkontakt tretende Bein bewirkt und zur Krafterzeugung genutzt. Während der gesamten Vorwärtsbewegung befinden sich Unterschenkel und Fuß bei in Translationsrichtung unterschiedlichen Positionen etwa im Bereich der Mittelebene des Gerätes. Um sicherzustellen, dass bei seitlichen Verkippungen des Gerätes der Fuß, das Fußgelenk oder der Unterschenkel mit dem Rahmen des Gerätes in Kontakt tritt, wird in einer zweckmäßigen Weiterbildung vorgeschlagen, den Rahmen derart zu gestalten, dass er u-förmig nach oben gebogen ist und an seinen beiden äußeren Enden über Gabel die beiden Räder aufnimmt. Während jeder Bewegungsphase sind folglich schmerzhafte Kontakte des Benutzers mit dem Rahmen des Gerätes mit Sicherheit ausgeschlossen.

Es ist vorgesehen, dass das Gerät lenkbar ist und zu diesem Zweck der Rahmen zweigeteilt ist. Die beiden Rahmenteile sind über eine in nahezu senkrechter Richtung zu den Radachsen verlaufenden Achse schwenkbar miteinander verbunden. Beide Rahmenteile sind in ihren Endbereichen, an denen sie mit der Radachse verbunden sind, aufgeweitet, sodass sie die Räder seitlich gabelartig umschließen.

Die Vorschubbewegung eines einzelnen Beines beginnt damit, dass sich der Fuß entsprechend der Beinlänge in Bewegungsrichtung möglichst weit vorne in Bodenkontakt tritt um dann unter dem Körper des Benutzers hindurch nach hinten bewegt zu werden. Zu Beginn des Bodenkontaktes wird das Bein im wesentlichen durchgestreckt sein, um während der Bewegung aufgrund des sich verringerndem Abstandes zwischen Hüftgelenk und dem Boden eine Verkürzung zu erfahren, die zwangsläufig zu einer Anwinkelung des Beines führt. Mit Beendigung des Abstoßvorganges wird das Bein im wesentlichen wieder durchgestreckt sein. Im angewinkelten Zustand, also dann, wenn das Bein im wesentlichen unterhalb des Benutzers positioniert wird, ist die Kraftübertragung und damit die Möglichkeit des Vortriebes stark eingeschränkt. Zur Vermeidung dieser Nachteile ist vorgesehen, dass sich die Höhe des Sitzes synchron zur Beinbewegung verändert. Die Sitzhöhe soll dann maximal sein, wenn sich das Bein in etwa unterhalb des Sitzes befindet. Diese Vergrößerung der Sitzhöhe hat zur Folge, dass die Anwinkelung des Beines verringert und demzufolge die Kraftübertragung verbessert wird. Im Rahmen der Erfindung steht grundsätzlich frei, auf welche Art und Weise die Verstellung der Sitzhöhe erfolgt und auf welchem Wege die Ansteuerung erfolgt. Eine mechanische Ansteuerung könnte derart erfolgen, dass die zurückgelegte Wegstrecke mit Hilfe eines Rades erfasst und zu der durch die Beinlänge bestimmten Abstoßstrecke in Bezug gesetzt wird. Auch sind optische Erfassungen der Beinbewegung denkbar. Im Ergebnis erhält man eine Lösung, die während der gesamten Bewegung des Beines eine verbesserte Kraftübertragung zulässt.

Bevorzugt ist, die Höhe des Lenkers in vertikaler Richtung betrachtet, höher als den Sitz zu wählen. Höhenunterschiede von bis zu 50 cm sind ohne weiteres denkbar. Durch dieser Anordnung erreicht man, dass der Benutzer auf dem Gerät eine im wesentlichen aufrechte Haltung einnimmt und zu dem während jeder Bewegungsfreiheit, also insbesondere auch im Bereich vor als auch hinter dem Sitz, günstige Bedingungen für die Erzeugung eines optimalen Vortriebes schafft. Die Aufrechterhaltung erweist sich auch als Vorteil im Rahmen von Rehabilitationsmaßnahmen, die der Herstellung der Gehfähigkeit dienen, bei denen eine vertikale Ausrichtung erfolgt. Anders formuliert sollen gerade jene Haltungen vermieden werden, die sich zwangsläufig bei der Benutzung eines Rennrades ergibt.

Im Rahmen der Erfindung ist unter Berücksichtigung der die Vorwärtsbewegung verursachenden Bewegung der Beine, eine besondere Gestaltung der Sitzfläche vorgesehen. In dieser Weiterbildung weist die Sitzfläche einen schmalen horizontalen Abschnitt auf, der das Gewicht des Nutzers bei entsprechender Polsterung aufnimmt. Dieser horizontale Abschnitt ist fast gleichbleibend breit, weitet sich allenfalls in Richtung des Hinterrades leicht auf und kann diesem Endbereich leicht nach oben gezogen sein. Ausgehend von dem schmalen horizontalen Abschnitt weist die Sitzfläche zwei seitlich nach unten gezogene vertikale Seitenabschnitte auf. Diese seitlichen Flächen weisen zur Verminderung der Reibung eine möglichst glatte Oberfläche auf und führen das Bein in seiner Pendelbewegung. Durch die Seitenflächen kann bei entsprechender Beabstandung derselben auch erreicht werden, dass der Nutzer des Gerätes nach Beenden der Beinbewegung sich und das Gerät aufgrund der erforderlichen Breitstellung der Beine schnell gegen ein seitliches Kippen stabilisiert.

Natürlich liegt es im Rahmen der Erfindung, dass die Höhe und/oder horizontale Position der Sitzfläche variabel einstellbar ist.

Im folgenden sollen Einzelheiten und Merkmale der Erfindung anhand von Beispielen näher erläutert werden. Die abgebildeten Beispiele sollen die Erfindung jedoch nicht einschränken, sondern nur näher erläutern. Es zeigen in schematischer Darstellung:
- **Figur 1:**: Sport- und Therapiegerät in der Seitenansicht
- **Figur 2:**: Sport- und Therapiegerät in der Seitenansicht mit besonderer Sitzfläche.

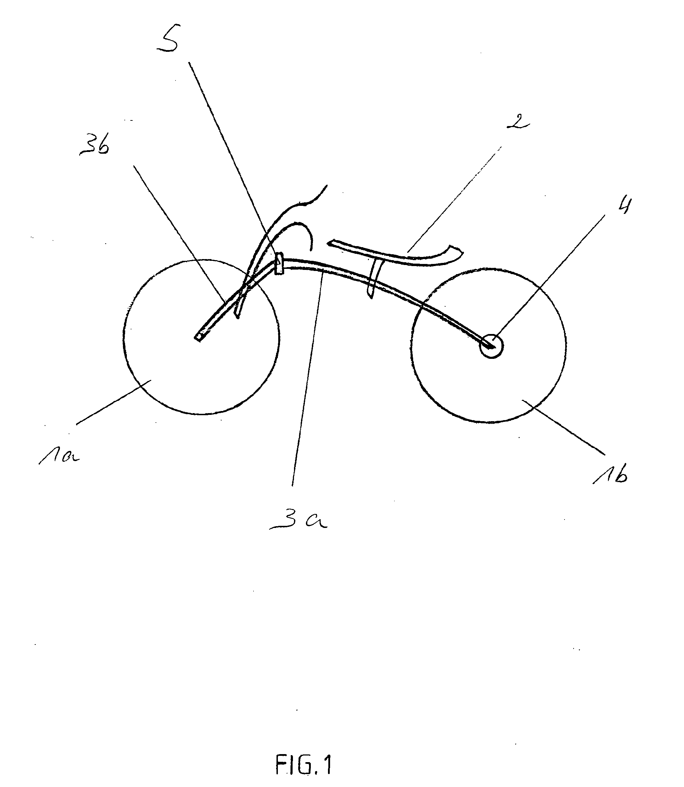

Figur 1 zeigt das aus zwei drehbar gelagerten Rädern 1 a, 1b bestehende Sportgerät. Die beiden Räder sind durch einen zweiteiligen Rahmen 3a, 3b mit einander verbunden. Zwischen den beiden Rahmenteilen 3a und 3b besteht eine drehbare Verbindung 5, die das Sportgerät lenkbar macht. Am Rahmenteil 3a ist eine in der Höhe und in der vertikalen Position verstellbare Sitzfläche 2 angebracht. Die Rücklaufsperre 4 ist in der Achse des Hinterrades 1 b installiert.

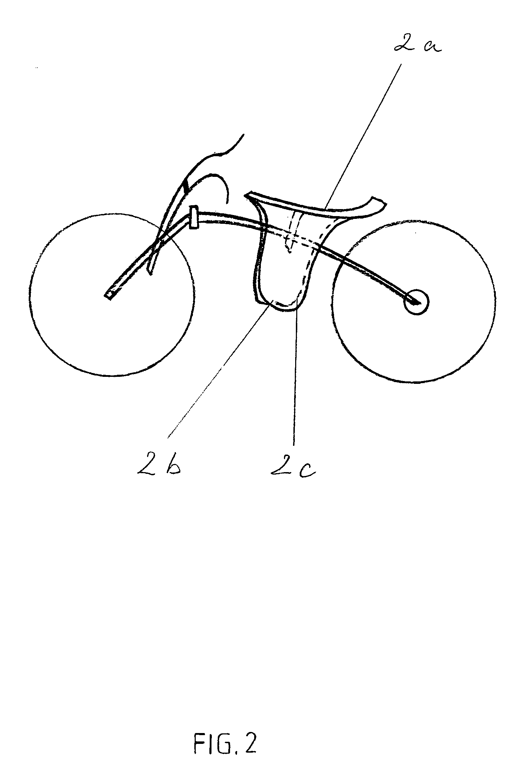

Figur 2 zeigt das erfindungsgemäße Sportgerät dessen horizontal verlaufende Sitzfläche 2a durch zwei nach unten verlaufende seitliche Flächen 2b und 2c verlängert wird. Diese Seitenflächen bewirken eine Beabstandung der Beine, sodass dem Nutzer bei Stillstand des Spielgerätes dessen Stabilisierung leicht fällt.

## Patentansprüche

1. Sport- und Therapiegerät mit zwei oder mehreren drehbar gelagerten Rädern (1a, 1b) und zwei Achsen, die über einen eine Sitzfläche (2) aufweisenden Rahmen (3a, 3b) miteinander verbunden sind, wobei die an einer der Achsen befestigten Räder (1a) lenkbar sind, **dadurch gekennzeichnet, dass** mindestens eines der Räder (1 b) mit einer Rücklaufsperre (4) ausgerüstet ist.

2. Gerät nach Anspruch 1, **dadurch gekennzeichnet, dass** die Rücklaufsperre (4) in einer oder zwei Radachsen installiert ist.

3. Gerät nach einem der vorgehenden Ansprüche, **dadurch gekennzeichnet, dass** an mindestens einem der Räder (1a, 1 b) ein Bremswiderstand variabel einstellbar ist.

4. Gerät nach Anspruch 3, **dadurch gekennzeichnet, dass** der Bremswiderstand in Stufen einstellbar ist.

5. Gerät nach einem der vorhergehenden Ansprüche, **dadurch gekennzeichnet, dass** das Gerät insgesamt drei Räder aufweist, wobei zwei der Räder an den beiden Enden einer der Achsen drehbar befestigt sind.

6. Gerät nach einem der vorhergehenden Ansprüche, **dadurch gekennzeichnet, dass** der Rahmen bogenförmig und mit seinen Mittelteil nach oben zu gerichtet ist.

7. Gerät nach einem der vorhergehenden Ansprüche, **dadurch gekennzeichnet, dass** der Rahmen (3a, 3b) einen zweiteiligen Aufbau aufweist und die Rahmenteile über eine in nahezu senkrechter Richtung zu den Radachsen verlaufende Achse schwenkbar beweglich verbunden sind.

8. Gerät nach einem der vorhergehenden Ansprüche, **dadurch gekennzeichnet, dass** synchron zur Beinbewegung eine Verstellung der Höhe des Sitzes erfolgt, in dem Sinne, dass bei Positionierung des Fußes etwa unterhalb des Sitzes die Sitzhöhe maximal ist.

9. Gerät nach einem der vorhergehenden Ansprüche, **dadurch gekennzeichnet, dass** in vertikaler Richtung betrachtet die Höhe des Lenkers höher ist als die des Sitzes.

10. Gerät nach einem der vorhergehenden Ansprüche, **dadurch gekennzeichnet, dass** die Sitzfläche (2) aus einem schmalen horizontalen Abschnitt (2a) und zwei seitlich nach unten gezogenen vertikalen Abschnitten (2b, 2c) besteht.

11. Gerät nach einem der vorhergehenden Ansprüche, **dadurch gekennzeichnet, dass** Höhe der Sitzfläche (2) variabel einstellbar ist.

12. Gerät nach einem der vorhergehenden Ansprüche, **dadurch gekennzeichnet, dass** die Sitzfläche (2) in horizontaler Richtung variabel einstellbar ist.

13. Verwendung eines Gerätes nach einem der Ansprüche 1 bis 12 im Bereich des Breiten- und Leistungssports und/oder der Krankengymnastik und/oder bei Therapie- und Rehabilitationsmaßnahmen.
